# EUROPEAN PATENT SPECIFICATION

(11) **EP 2 453 733 B1**
(45) Date of publication and mention of the grant of the patent: **14.05.2014**
(21) Application number: 10735306.2
(22) Date of filing: 15.07.2010
(51) Int. Cl.: A01K 11/00

(54) **ANIMAL TAG APPLICATOR**
TIERMARKENAPPLIKATOR
APPLICATEUR DE MARQUES D'ANIMAUX

(30) Priority: 15.07.2009 GB 0912322
(43) Date of publication of application: 23.05.2012
(73) Proprietor: Shearwell Data Limited, Minehead, Somerset TA24 7AS (GB)
(72) Inventor: WEBBEER, Richard, Somerset TA24 7AS (GB)
(74) Representative: Bailey, Sam Rogerson
(86) International application number: PCT/GB2010/001358
(87) International publication number: WO 2011/007150

(56) References cited:
- EP-A1- 0 482 902
- EP-A2- 0 002 619
- WO-A1-2008/075974
- WO-A2-02/23980
- GB-A- 2 055 670
- GB-A- 2 276 112

## Description

This invention has to do with applicators for animal tags, in particular ear tags.

### BACKGROUND

It is well known in the field of animal identification to provide an identification tag, typically attached to the animal's ear. Such tags may comprise two parts (such as a male and female part) which interlock with one part passing through the animal's ear. Alternatively a tag may be formed with a flexible connection between the two interlocking parts, i.e. as a single unit.

In order to attach tags to an animal, an applicator is used which typically drives a spiked male part of the tag through the animal's ear to engage with a female part of the tag on the other side so securely affixing the tag to the animal.

Many applicators used to apply tags to animals only accept one tag and must be re-loaded after each tag is applied to the animal. This is time consuming and can be intricate or awkward to perform and may result in loss of tags if they are dropped while the user is trying to load a new tag into the applicator.

Some applicators are known which feed strips of interconnected tags into the applicator and incorporate a reloading mechanism to feed tags sequentially to the applicator jaws to be applied to an animal. Such applicators typically include a cutting device to sever the front tag from the strip of tags before it is applied to an animal. Such applicators have had some success but are limited by the strips of tags that are supplied for application. The user has no choice about the tag sequence and, if a different type of tag is desired, the whole strip must be changed. These applicators are also mechanically quite complex because a severing device must be provided and timed to cut the front tag from a strip of tags before application to an animal.

In some situations, it is desirable to apply a plurality of different tags to the same animal. For example, it may be desirable to apply a tag comprising an electronic identification device and a separate tag allowing visual identification. Both types of tags are known in the art. For example, electronic identification tags are described in EP 1530417.

It is common in livestock farming to tag different groups of animals with visually distinct tags so that they can be easily separated or sorted (a process known as "drafting") by visually identifying the group to which the animal belongs (based on its tag) and sorting it accordingly.

In some countries or regions, there may be restrictions (e.g. legislative restrictions) on the exact nature (e.g. colour, shape, size, markings etc.) of particular tags, especially electronic identification tags. For example electronic identification tags may be required to have a particular colour. Such uniformity of identification tags makes it difficult to visually identify different animals or groups of animals and hence to visually sort animals into groups or sub-groups. To overcome such difficulty, it is known to attach a second identification tag which has few or no restrictions on its nature and hence can be visually distinct according to the particular group or sub-group of the animal. This allows electronic identification (using the electronic tag with restrictions on its particular form) and also easy visual identification to allow manual sorting of livestock according to visually distinct identification tags.

The application of two different tags to the same animal is not straightforward with existing applicator devices. In the case of the single-tag applicator, the tags must be individually loaded into the applicator and the user must select a first type of tag (e.g. an electronic tag) followed by a second type of tag (e.g. a visual identification tag) and apply each separately. In the case of the applicator which is loaded with a strip of tags, either the strip of tags must be changed between applying the first tag (e.g. an electronic tag) and the second tag (e.g. a visual identification tag), or two different applicators must be used, one loaded with the first type of tag (e.g. electronic tags) and the other with the second type of tag (e.g. visual identification tags). None of these situations is satisfactory in terms of efficiency or ease of use.

In the present disclosure, we address this awkwardness and inefficiency associated with application of a plurality of different tags to an individual animal.

In relation to applicators which are fed by a strip of identical conjoined tags, US 5,234,440 describes an applicator which receives a strip of conjoined tags and with each operation of a trigger handle, detaches a tag from the strip and engages a male portion of the tag with a female portion across an opening in the applicator designed to receive the ear of an animal to be tagged, hence punching the tag through the ear and firmly attaching it to the animal.

In relation to applicators for two-part tags, GB 2 010 727 A describes an applicator which is fed by two separate cartridges, the first containing a reservoir of male tag components and the second a reservoir of female tag components. When the jaws of the applicator are opposed across the ear of an animal, a spiked male portion is fed to one jaw of the device and is driven through the ear to engage with a female portion which is independently fed to the opposing jaw of the device.

EP 0002619A and GB 2055670A both describe animal tag applicators. The tags applied are one-part tags, which have male and female portions which engage on application.

### OUR PROPOSALS

An object of the present proposals is to provide a new and useful applicator system for animal identification tags which can be loaded with individual tags (i.e. single tags not joined to each other in a strip or similar).

According to a first proposal, there is provided an applicator system comprising an applicator a removable magazine which is, or can be, loaded with individual animal identification tags.

Accordingly, described herein is an applicator system for animal identification tags comprising a tag magazine and an applicator having a pair of jaws, the tag magazine adapted to supply discrete identification tags, each comprising a male and female engagement portion, sequentially to the jaws which, upon actuation, engage the male and female portions of the tag through the ear of an animal placed between the jaws.

The applicator body comprises a tag dispensing opening into which an ear of an animal can be inserted. Typically this is provided by a pair of jaws between which an ear can be inserted. The applicator body also has an trigger, typically in the form of a handle, foot pedal or a button (preferably a handle) which, when actuated, causes a tag which is situated in the dispensing opening to be connected across the dispensing opening, e.g. by causing a male part of the tag to be driven across the opening to engage with a female part on the opposite side. When an animal's ear is inserted in the dispensing opening, this dispensing motion securely affixes the tag to the animal, e.g. by driving a spiked male portion of the tag through the ear and engaging it with a female portion of the tag on the other side of the ear.

The applicator body has magazine receiver apparatus to receive the removable magazine and removably connect it to the applicator body.

The magazine itself comprises a reservoir for holding animal identification tags and at least a front opening through which such tags can be dispensed. Preferably the reservoir comprises an elongate channel with one end terminating in the front opening of the magazine. Such channel is preferably about the width of a single tag and is typically not wide enough for two tags to be arranged side by side. This results in the tags being arranged in a single file in the reservoir. In preferred embodiments, the elongate channel is substantially straight. If the channel has too great a curvature, the tags may not feed smoothly along it causing a failure in the supply of tags to the dispensing opening.

When the magazine is attached to the applicator body, the tags in the reservoir are preferably urged towards the front opening of the magazine. This may be achieved by any suitable means but, when the reservoir is an elongate channel, a spring is preferably provided to urge the tags in the elongate channel towards the front opening of the magazine. Such a spring may be provided in the magazine itself or may be provided by the magazine receiver apparatus of the applicator body. Preferably it is provided by the magazine receiver apparatus of the applicator body as this is more cost efficient than providing a spring in each magazine.

Where the spring is provided as part of the magazine itself, it may be, for example, a coil spring arranged along the elongate channel which is compressed when tags are loaded into the channel so as to urge the tags towards the front opening.

Alternatively a follower piston may be provided, either as part of the magazine itself or as part of the magazine receiver apparatus, which runs along the elongate channel of the magazine and is biased towards the front opening of the magazine. When tags are loaded into the magazine, such a follower piston urges the tags towards the front opening of the magazine. Such a follower piston arrangement is a preferred embodiment of the present proposals. In embodiments utilising a follower piston arrangement, the reservoir preferably also comprises a second opening at the rear end of the preferred elongate channel (distal from the front opening) which accepts a follower piston.

In embodiments having a follower piston, a piston retractor is preferably also provided. This is movable externally along the length of the magazine support and engages with the follower piston at least in the rearward direction (i.e. when moving towards the end of the magazine support distal from the jaws) to urge the follower piston towards the rear of the magazine support. Preferably a clip is provided to reversibly retain the follower piston or the retractor (and hence by engagement, the follower piston) at the rear of the magazine support.

The magazine may accept either one-part tags (having a male engagement portion and a female engagement portion joined together by a flexible connecting portion) or multi-part tags (e.g. two-part tags having a separate male and female component). Preferably the magazine is adapted to accept elongate one-part tags having a male engagement portion at one end and a female engagement portion at the other end with a flexible connecting portion between them. When such tags are applied to the ear of an animal, the male portion passes through the ear and engages with the female portion on the other side with the elongate connecting portion extending around the edge of the ear. Preferably, for reasons explained below, the tags have a resilient elongate connecting portion between the male portion and female portion of the tag.

When loaded into the magazine, the elongate tags are preferably held in a folded position by the dimensions of the removable magazine, typically by the dimensions of the preferred elongate channel reservoir of the magazine. In preferred proposals, the tags are folded such that the male engagement portion and the female engagement portion are opposed to each other along their axis of engagement (although they are not actually engaged). In preferred embodiments, the tags are held substantially in a "D-shape" configuration with a stem of the male portion of the tag forming the upright section of the D-shape and the elongate portion forming the curved section of the D-shape. The elongate portion of the tags is preferably flat prior to loading into the magazine and, as mentioned previously, is preferably resilient. Hence, when the tags are loaded in a bent arrangement in the magazine, they are biased towards an open, flat, position. This means that the two legs of the tags (each carrying one of the male or female portions of the tag) are trying to splay apart but are being restrained from doing so by the dimensions of the magazine reservoir.

In preferred embodiments, where the reservoir comprises an elongate channel and the tags are urged towards the front opening of the magazine, this bent (or D-shaped) arrangement of the tags means that the tags simply abut each other (e.g. the curved portion of one bent tag abuts the straight stem of a male portion of the adjacent tag) rather than stacking protruding into each other as they might if they were folded over to a lesser extent, e.g. in a V- or U- shape. Although the stacking of tags folded into a V- or U- shape may be more space efficient because the shapes can interlock, it can result in feeding problems in the magazine because the individual tags can become entangled, e.g. the male part of such tags often includes a spike portion with a shoulder which can catch on an adjacent tag if they are folded into a U- or V- shape and stacked interlocking each other. Such unwanted snaring of adjacent tags impairs the smooth dispensing of individual tags from the magazine. The present proposals avoid such snaring in preferred embodiments by folding the tags into a D-shape so that the male portion of the tag is not exposed and able to catch or snare on adjacent tags.

In preferred embodiments, where the magazine comprises an elongate channel, the walls of the channel define one or more recessed guide channels which may accept one or more protrusions on each tag. This arrangement can be beneficial to guide the tags along the elongate channel towards the front opening of the magazine and to prevent the tags from snaring or catching on each other as they are urged towards the front opening of the magazine. Preferably two opposite walls of the elongate channel of the magazine each define a guide channel which runs along the length of the elongate channel to accept two guide protrusions on each tag so as to keep the tags in line and running along the same plane and guide them towards the front opening of the magazine.

This ability to load individual tags into the magazine reservoir means that an applicator according to the present proposals can overcome the problems associated with the need to apply two (or more) different tags to an individual animal. The two or more tags may have a different size, shape, colour, marking or they may optionally include additional, known, identification components such as an electronic identification device. The only limitations are imposed by the size and shape of the components of the magazine. For example, in the situation described above in which it is desired to apply an electronic identification tag and a visual identification tag, such tags could be arranged one after the other in a magazine so as to be sequentially dispensed by the applicator device. This avoids the awkwardness associated with sequentially loading a single-tag applicator with separate tags of a first type and a second type. It also avoids any manufacturing difficulties that may be associated with preparing a strip of tags having tags of one type followed by tags of another type. Overall, it offers a system whereby the user can decide on the order of dispensing a variety of types of tags simply by ensuring that they are dispensed from the magazine in that order (e.g. by loading them in order in an elongate channel reservoir of a magazine).

In preferred embodiments, the magazine is made from transparent or translucent material or has a transparent or translucent window (in preferred aspects running along the length of the magazine) to allow a user to see the contents of the magazine. In embodiments having a transparent or translucent window, this may be formed by providing a magazine frame with a cut-out portion and a transparent or translucent insert which holds the tags and slides into the frame forming a transparent/translucent window at the cut-out portion. In these preferred embodiments, the user can easily determine the level of filling of the magazine (by visual inspection). These preferred embodiments also allow the user to visually determine the type of tag(s) loaded into the magazine, for example to see the colour(s) of the tags and markings (such as numbers) printed on the tags. This allows the user to easily select a desired magazine to load into the applicator and also to predict when a magazine will need changing by visually determining how many tags remain in the magazine.

As a further example, it is possible with the present system to provide a magazine loaded alternately with electronic identification tags interspersed with visual identifications tags. The use of such a magazine in an applicator according to the present proposals would allow the user to apply an electronic identification tag and a visual identification tag to each of a series of animals using a single device and without re-loading. Such a task is difficult with present applicators especially when two tags have to be applied at birth. Even where strips of conjoined tags are used, such a task would require the manufacture of a strip of alternating different tags, possibly with different properties such as size, colour etc. which presents significant manufacturing challenges. No such challenges are presented when applicators and magazines of the present proposals are used.

When the magazine is attached to the applicator body by the magazine receiver apparatus, the front opening of the magazine typically coincides with a tag regulator apparatus of the applicator body. This regulates the supply of tags to the dispensing opening. Typically the tag regulator is active to supply one tag at a time from the front opening of the magazine into a dispensing position in the dispensing opening of the applicator each time the trigger is actuated.

In preferred embodiments where the tags are folded in the magazine and are biased towards an open, flat position, when the tags advance out of the magazine front opening towards the dispensing position, they open out under this bias into a V- or U- shape in the dispensing position (i.e. with the legs of the tag splayed apart) to allow an animal part (such as an ear) to be inserted between the male and female portions of the tag. This allows the advantages of arrangement in a folded state in the magazine (as discussed above) while at the same time, avoiding the need to incorporate a specific mechanism to arrange the tag in the dispensing position in the dispensing opening (because the bias of the tag to try and open itself out drives it naturally into the dispensing position). In preferred embodiments, the dispensing opening is defined between a pair of jaws. Each jaw preferably has a tag retaining recess in the surface opposing the other jaw. These tag retaining recesses act as seats for each end of the tag in the face of the jaws and accept the ends of the tag in the dispensing position. Preferably each tag retaining recess has an abutment at the end of the recess away from the tag regulator apparatus against which the ends of the arms of a tag abut in the dispensing position.

The tag regulator preferably comprises a tag stop portion against which a tag abuts before proceeding into the dispensing position on actuation (e.g. the next actuation) of the trigger. In some embodiments, the tag stop portion, prevents the foremost tag in the magazine from leaving the front opening of the magazine and advancing into the dispensing position. This abutment occurs because the tags are urged towards the front opening of the magazine and out into the tag regulator apparatus. Upon actuation of the trigger, in a preferred embodiment, the tag stop portion retracts or otherwise moves to allow a tag to advance into the dispensing position, preferably driven by the urging means which urges the tags towards the front opening of the magazine. Preferably the tag stop portion is a pin which retracts to allow a tag to pass into the dispensing position.

In preferred embodiments, as a tag advances into the dispensing position, it engages the abutment in the tag retaining recess (mentioned above) of the jaws of the device. This stops the tag in the jaws of the device and prevents it from being driven entirely out of the jaws. In preferred aspects, the tendency of the legs of the tags to splay apart (due to the resilience of the elongate connecting portion of the tag) ensures that the ends of the tag engage the abutment in the tag retaining recess because the legs of the tag are urged apart and the ends of the legs slide along the respective faces of the jaws before engaging the abutment in the tag retaining recess.

Further aspects of these proposals include a method for applying an identification tag to an animal using the applicator described in these proposals.

Accordingly, these proposals also include a method of applying an identification tag to an animal, the method comprising:
a) providing an applicator system of any one of claims 1 to 10;
b) actuating the jaws of the applicator to attach a first tag to the ear of an animal and to sequentially feed a second tag to the jaws.

The proposed method may also be a method of applying two identification tags to one animal by further comprising the step of:
c) actuating the jaws of the applicator a second time to attach a second tag to the ear of the same animal.

Steps b) and c) may be repeated to attach a tag of the same first type and a tag of the same second type to a further animal.

The present proposals provide a method of applying plural identification tags to one animal without reloading the applicator device. The plural identification tags differ in one or more of size, colour, shape, functionality (such as radio frequency identification function). These methods also include applying the same preset group of identification tags, each group comprising plural identification tags, to multiple animals, from a single applicator device and preferably without reloading the applicator device (e.g. changing or reloading the magazine).

Embodiments of our proposals are now described by way of example, with reference to the accompanying drawings in which
Fig. 1 shows an applicator body according to a first embodiment of the invention.
Fig. 2 shows a section through the embodiment shown in Fig. 1.
Fig. 3 is a perspective view showing the loading of the magazine into the applicator body.
Fig. 3a shows an enlarged portion of the loaded magazine illustrated in Fig. 3.
Fig. 4 shows the loaded applicator with the first tag abutting the tag stop pin.
Fig. 4a shows an enlargement of the open jaws of Fig. 4.
Fig. 5 shows the loaded applicator with a tag in the dispensing position between the jaws.
Fig. 6 shows detail of the region A of Fig. 1 showing the mechanism which controls the tag stop pin.
Fig. 7 shows the activation bar used in the mechanism of Fig. 6.
Fig. 8 shows another embodiment of the invention having a piston retractor.
Fig. 9 shows detail of one end of the embodiment shown in Fig. 8 with the piston retractor in its rearmost position.
Fig. 10 shows a cross-section through the end shown in Fig. 9.
Fig. 11 shows an alternative view of the end of the embodiment shown in Fig. 8.

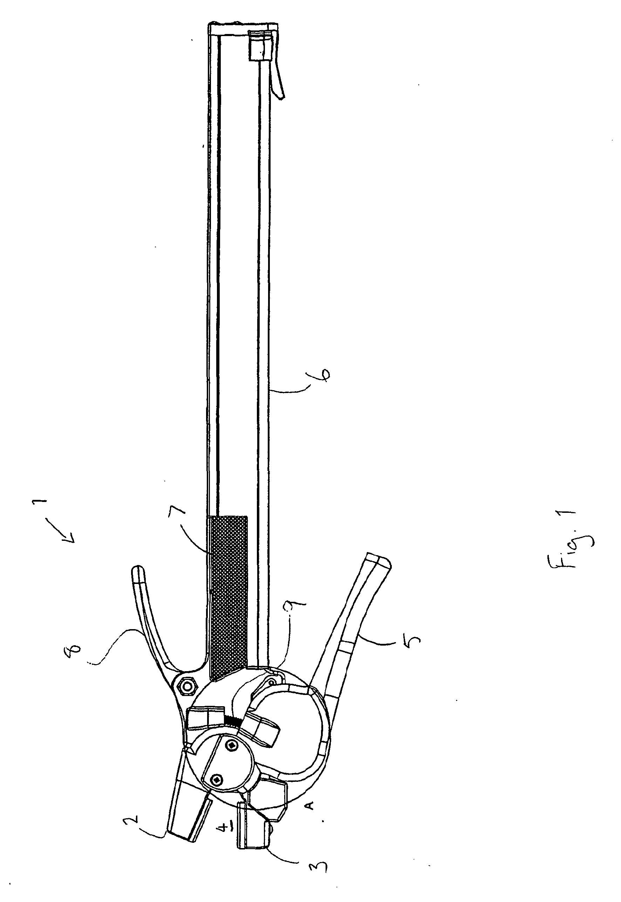

Fig. 1 shows an applicator body 1 having a pair of jaws 2/3 defining a dispensing opening 4. A trigger handle 5 is provided which, when squeezed towards the magazine support 6, causes the jaws to clamp together to affix a tag in the dispensing position between them to the ear of an animal which is placed in the dispensing opening 4. A hand grip 7 is also provided to give the user a comfortable hold towards which to squeeze the trigger handle 5. An adjustable support arm 8 is also provided and can be used for balance and control and to help the user to position the jaws around the ear of an animal or, possibly, also as a fixing point with which the applicator can be hung up. A biasing spring 9 is provided to bias the jaws 2/3 of the applicator towards an open position. The applicator generally comprises two main portions which overlap and are joined together at a pivot. The major portion comprises the lower jaw 3, the magazine support 6 and the support arm 8. The minor portion comprises the trigger handle 5 which is connected to the upper jaw 2 across the pivot point with the major portion.

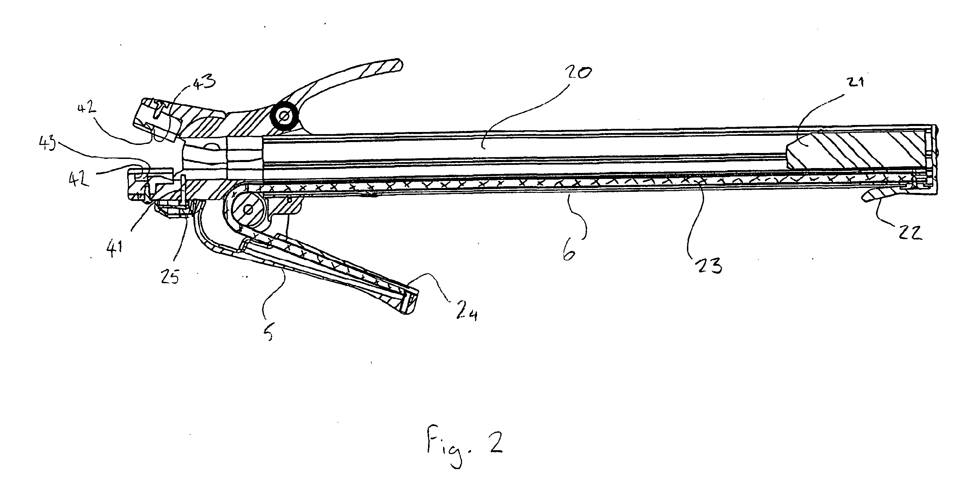

With reference to Fig. 2, the magazine support 6 can be seen to be a straight elongate member having a channel 20 along its length which is dimensioned to accept a magazine. A follower piston 21 is provided in the magazine support and can run freely along the length of the channel in the magazine support. In Fig. 2, the follower piston 21 is seen at the rear of the magazine support channel 20 and held in this position by a retaining clip 22. The follower piston 21 is biased towards the front of the magazine support channel 20 (i.e. the end nearest the jaws) by a coil spring 23 which is anchored inside the trigger handle 5 at an anchor point 24 with the other end attached to the follower piston 21. The coil spring is under tension in Fig. 2 so is urging the follower piston towards the front end of the magazine support channel 20, i.e. closest to the jaws of the applicator. The retaining clip 22 retains the follower piston at the back of the magazine support channel 20 in Fig. 2.

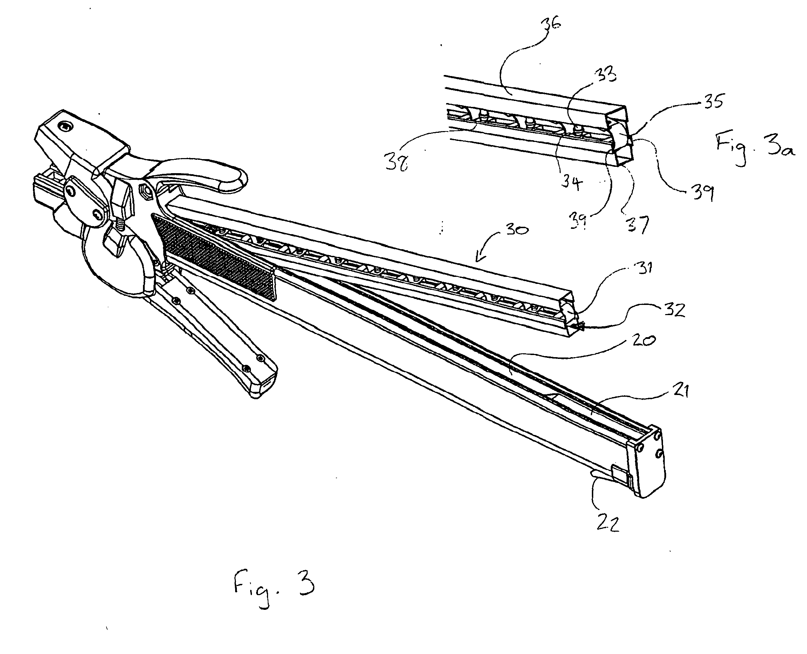

Fig. 3 shows a magazine 30 being loaded into the applicator, specifically into the channel 20 in the magazine support. The magazine 30 is loaded with individual animal identification tags 31 which are arranged in line in a channel 32 running along the length of the magazine 30. An enlarged portion of the loaded magazine is shown in Fig. 3a. The individual tags 31 are folded over so that the protruding male portion 33 is touching the female portion 34, although not actually engaged with it. The elongate connecting portion of the tag 35 is bent over but is biased (by the resilience of the connecting portion) against the upper and lower walls 36/37 of the magazine 30. A recess 39 is provided in each wall of the magazine 30 to accept a projection on each side of each tag. These projections are unseen in Fig. 3 but can be easily envisaged as being provided at some point near the female portion 34 of the tag or along the sides of the elongate tag portion between the female portion 34 and the bend in the elongate portion 35. These projections run along the recesses 39 and keep the tags in a level and controlled position along the channel 32. This may help to prevent the tags from catching or snaring on each other in the magazine 30 and causing jams in the tag feed.

To insert the magazine 30 into the magazine support channel 20, the follower piston 21 is pulled to the back of the magazine support channel 20 and held in place with the retaining clip 22. The channel 20 is longer than the magazine 30 to provide space for the magazine 30 to be inserted in front of the follower piston 21. The magazine 30 can then be placed into the magazine support channel 20 in front of the follower piston 21. When the magazine is in place, the retaining clip 22 is released and the follower piston 21 advances (driven by the tension in the coil spring 23) until it bears on the rearmost of the tags in the magazine. The magazine 30 has a slot 38 down one side through which the mounting for the spring 23 protrudes and along which it runs as the follower piston 21 advances along the magazine (as tags are dispensed). This allows the spring 23 to maintain its urging force against the rearmost tag in the magazine until the magazine is empty. In the absence of such a slot, the follower piston 21 of this embodiment would not be able to advance along the channel of the magazine 20. The advantage of using a coil spring under tension is that the spring 23 can be located alongside the magazine and, in this embodiment, extend down into the handle 5 placing it under sufficient tension so that the urging force on the rearmost tag in the magazine 30 is maintained even when the magazine is nearly empty. This is not so easily achievable with other spring arrangements. For example a compression spring located in the back of the magazine 30 would require a spring sufficiently long in its uncompressed state that it would still exert an urging force when the magazine 30 was nearly empty; such a long spring would take up space at the back of the magazine 30 when the magazine 30 was full so is less desirable from the point of view of efficient use of space to load the magazine 30 with as many tags as possible into a given length of magazine. The arrangement in the embodiment of Fig. 3, also allows different length magazines 30 to be used in the same applicator because the follower piston 21 simply advances along the channel 20 until it bears on the rearmost tag in the magazine 30.

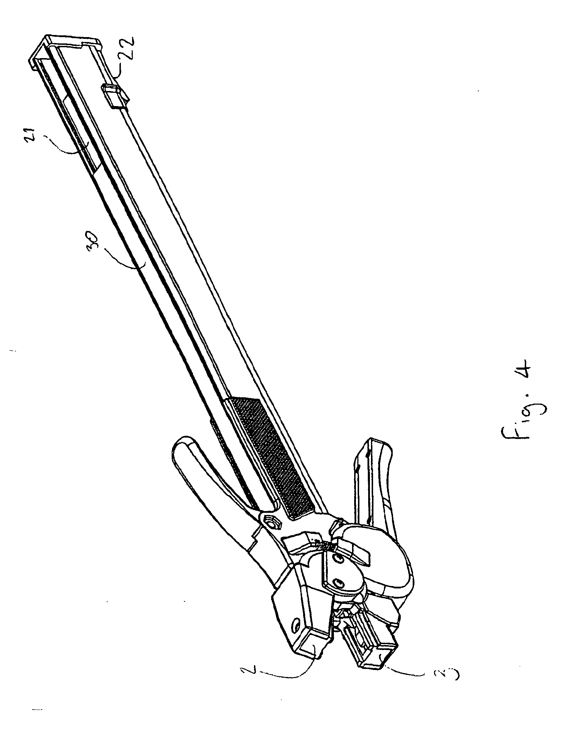

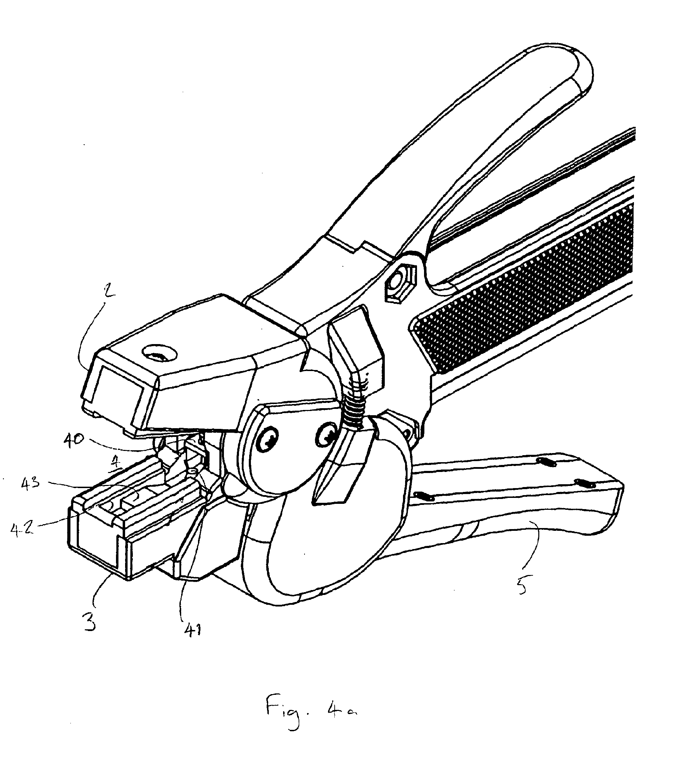

Fig. 4 shows an embodiment of the present applicator loaded with a magazine 30. The retaining clip 22 has been released so the follower piston 21 is bearing on the back of the rearmost tag in the magazine 30 and is urging the tags in the magazine 30 towards the front of the magazine, i.e. towards the jaws 2/3 of the device. The recesses 39 and projections on the tags (described above in relation to Fig. 3a) help to keep the tags running in file when under pressure from the follower piston 21.

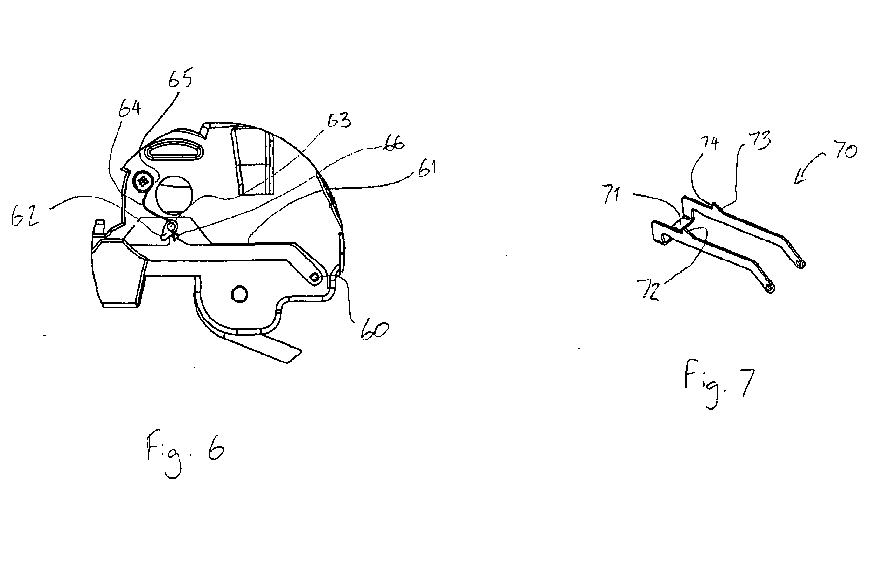

An enlargement of the open jaws is shown in Fig. 4a in the state immediately following insertion of the magazine 30 and release of the follower piston 21 so the tags in the magazine 30 are urged towards the front end of the magazine 30. In Fig. 4a, the front part of the foremost tag 40 can be seen through the open jaws of the device. The foremost tag abuts the tag stop pin 41 which prevents it from advancing into the jaws of the device and into the dispensing position. When the magazine is initially loaded into the applicator and the follower piston 21 is released, the tags are urged forwards until the foremost tag abuts the tag stop pin 41. In order to advance this foremost tag into the dispensing position between the jaws 2/3, the trigger handle 5 must be actuated once, which does not dispense a tag but, on release of the trigger handle 5, the tag stop pin 41 is retracted into the lower jaw 3 and allows the foremost tag to be driven forward into the dispensing position between the jaws. As it is driven forwards, by the follower piston 21, the tag opens out from a position where the male and female parts are touching or almost touching, to one in which arms of the tag holding the male and female parts are splayed apart. Subsequent actuation of the trigger handle 5 has the effect of squeezing together the jaws to drive the male part of the tag through the ear of an animal which is inserted into the dispensing opening 4 to engage with the female part of the tag which is retained in the bottom jaw 3 of the device and securely fix the tag to the ear of the animal. Upon release of the trigger handle 5, a mechanism (an example of which is shown in Fig. 6) retracts the tag stop pin 41 into the lower jaw 3 allowing the next tag in the magazine to advance into the dispensing position between the jaws 2/3. When the tag stop pin 41 is retracted, the driving force to urge the foremost tag into the dispensing position is provided by the spring 23 urging the follower piston 21 to bear on the rearmost tag in the magazine 30. An abutment 42 is provided in a tag retaining recess 43 in each jaw 2/3 (the one in the upper jaw is unseen in Fig. 4a but shown in Fig. 2) which engages the end of the leg of the tag to prevent the foremost tag 40 from being ejected from the jaws of the device altogether by the pressure from the follower piston 21. As the foremost tag 40 emerges from the magazine 30, it opens from the folded state in the magazine 30 and the two arms of the tag splay apart due to the resilience of the elongate connecting portion of the tag. This splaying ensures that the two arms of the tag engage the abutment portion 42 in each jaw 2/3 (the one in the upper jaw unseen in Fig. 4a but visible in Fig. 2).

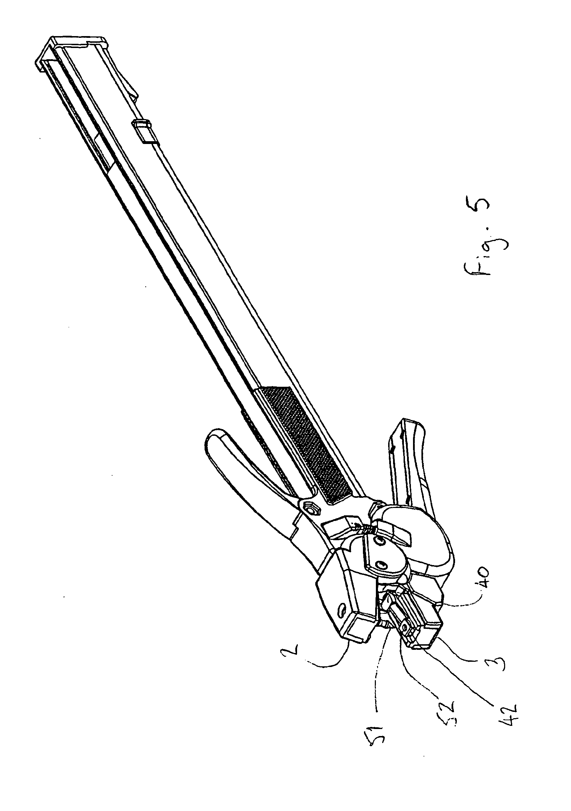

Fig. 5 shows a foremost tag 40 in the dispensing position between the jaws 2/3 of the applicator device. The male portion 51 and female portion 52 of the tag are splayed apart (on exit from the magazine 30) due to the resilience of the elongate connecting portion of the tag ensuring that the two arms engage the abutment portions 42 in the lower jaw 3 and similar (unseen here) in the upper jaw 2. This splaying of the two arms of the tag means that the tag naturally assumes the dispensing position in which the ear of an animal can be inserted between the male portion 51 and the female portion 52 of the tag to prepare for fixing of the tag to the animal.

Fig. 6 is a section through the circular region A in Fig. 1 and shows additional detail of the mechanism which retracts the tag stop pin 41 into the lower jaw 3 upon release of the trigger handle 5. The tag stop pin 41 is biased towards the protruding position, i.e. in which it blocks advancement of tags from the magazine 30 into the dispensing position between the jaws 2/3. In Fig. 4a, the tag stop pin 41 is shown in the protruding position. A leaf spring 25 (seen in Fig. 2) provides the bias force towards the protruding position. The mechanism which retracts the tag stop pin 41 into the lower jaw 3 includes a retractor element 70 (shown in Fig. 7) which is generally U-shaped and has a retractor surface 71 joining the two arms at one end which engages with the tag stop pin 41 and/or the leaf spring 25. The retractor element is connected at the end of each arm (distal from the retractor surface 71) to a pivot 60. The force of the leaf spring 25 acts to urge the retractor element to rotate clockwise around the pivot point 70 but the retractor element abuts a retaining feature 61 against which it is pressed by the rotating force from the leaf spring 25. The pivot point 60 and retractor element 70 are mounted on the body of the applicator with the pivot point 60 rearward of the lower jaw 3.

The retractor element 70 has a tooth 72 on each arm each of which engages a cam 62 mounted on an axle 63. The cam 62 is rotatably fixed to the axle 63 which is mounted on the minor portion of the applicator (i.e. the portion having the trigger handle 5 and the upper jaw 2). A return spring 64 is provided one end of which is mounted through a radial hole through the axle 63. The other end of the return spring 64 engages a spring mount 65. The return spring 64 biases the axle 63 (and hence the cam 62) to rotate anticlockwise. A cam locating pin 66 is provided to engage the cam 62 and prevent it from further anticlockwise rotation.

Each tooth 72 has a, preferably gently, inclined rear edge 73 and a steep (at least steeper than the rear edge incline) front edge 74. As the trigger handle 5 is released after being squeezed towards the magazine support 6, each cam 62 rides up the inclined rear edge 73 of the tooth 72. This motion pivots the retractor element 70 about the pivot 60 and the retractor surface 71 of the retractor element 70 pushes the tag stop pin 41 back against the leaf spring 25 to retract the tag stop pin 41 into the lower jaw 3, hence allowing a the foremost tag to advance into the dispensing position as described above. Once the cams 62 pass the top of the inclined rear edge 73 of the tooth 72, the retractor element pivots clockwise about the pivot 60 to abut the retaining feature 61 and the tag stop pin 41 returns to the protruding position (through action of the leaf spring 25). As the trigger handle 5 is squeezed towards the magazine support 6, the retractor element 70 moves relative to the cam 62 (downward in Fig. 6) because the retractor element 70 is mounted on the major portion of the applicator and the cam 62 (and axle 63) is mounted on the minor portion. This relative movement creates sufficient space for the cam 62 to be driven anticlockwise by the return spring 64 and ride back over the top of the tooth 72 on each arm of the retractor element 70 until it hits the locating pin 66. When the trigger handle 5 is released again, the relative movement of the major and minor portions of the applicator cause the retractor element 70 to move back towards the cam 62 so that the cam 62 is ready to engage and ride up the inclined surface 72 of the tooth again when the trigger handle 5 is released.

This mechanism means that each time the trigger handle 5 is squeezed towards the magazine support 6 and released, the tag stop pin 41 is retracted (upon release of the trigger handle 5) into the jaw 3 allowing one tag to pass into the dispensing position.

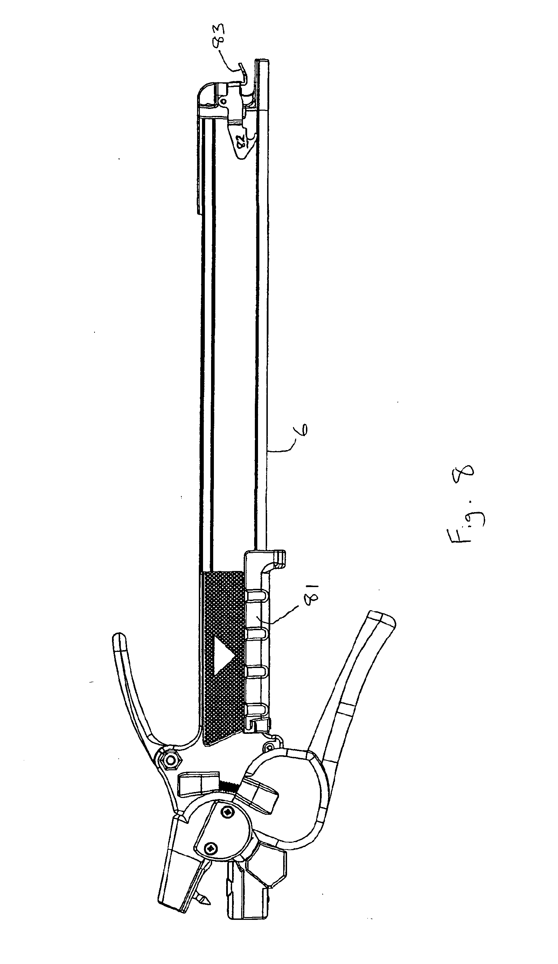

Fig. 8 shows an alternative embodiment of the follower piston 21 and the section of the device which restrains this piston 21 at the rearmost end of the applicator device. In Figs 1-7, a retaining clip 22 is provided to retain the follower piston in this rearmost position to allow a magazine 30 to be loaded into the applicator device. In the embodiment shown in Fig. 8, a piston retractor 81 is provided. This piston retractor 81 engages with the follower piston 21 when the retractor 81 is moved towards the rear end of the magazine support 6. The retractor 81 can be moved along the length of the magazine support 6 and as it is moved in the rearward direction along the magazine support 6, it engages with the follower piston 21 and drives it in a rearward direction against the action of the spring 23.

At the end of the magazine support distal from the jaws 2/3, a retractor clip 82 is provided. This engages the retractor 81 when it is at the rear end of the magazine support 6 and prevents it, and hence the follower piston, from moving forward under the action of the spring 23. The retractor clip 82 has a release portion 83 which, when pressed, raises the retractor clip 82 and releases the retractor 81 (and hence the follower piston 21) to move forwards along the magazine support.

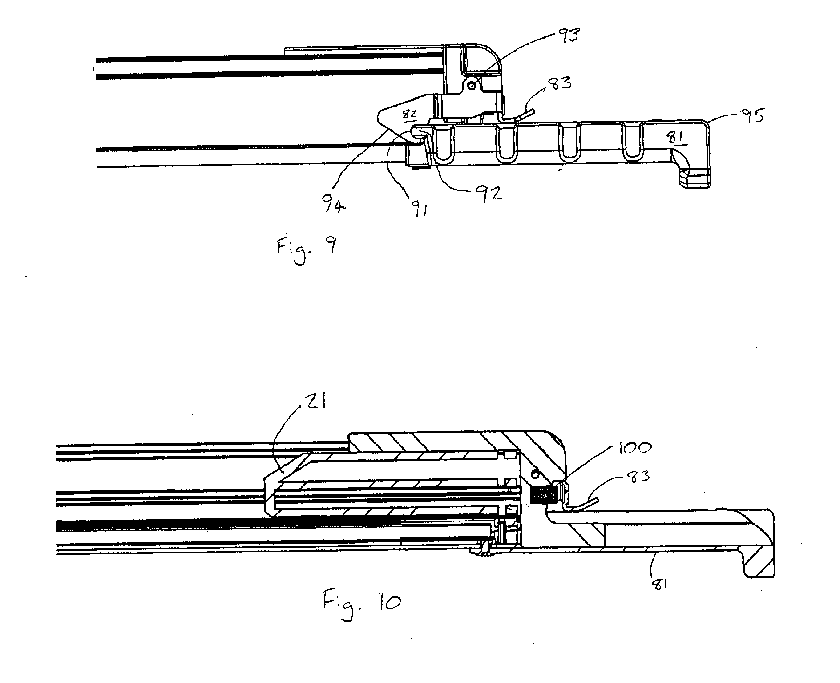

Detail of the retractor 81 and retractor clip 82 assembly is shown in Fig. 9. The retractor 81 is shown in the rear position and is retained by the retractor clip 82. The retractor clip 82 has a recess 91 which engages with a protrusion 92 on the retractor 81 to retain the retractor (and hence the follower piston 21) and prevent it from being urged forwards under the action of the spring 23. The retractor clip 82 also has a leading edge 94 which is inclined to the axis of the magazine support 6 so that as the retractor 81 is drawn rearwards along the magazine support 6, its rear corner 95 engages with the incline 94. As the retractor 81 continues to be drawn rearwards, the incline 94 rides up against the corner 95 as the retractor clip pivots about a pin 93. When the retractor is drawn past the retractor clip 82, the clip springs back (under the action of a spring 100) to align the recess 91 and protrusion 92 so that the clip 82 retains the retractor 81.

The clip 82 can be released by moving the retractor 81 slightly rearwards (to disengage the recess 91 and protrusion 92) and then pressing the release portion 83 downwards towards the retractor 81. This causes the clip 82 to pivot about the pin 93 and raises front of the clip to allow the retractor 81 to pass underneath it. This frees the follower piston 21 to move forwards and abut the rearmost tag in the magazine 30. The retractor 81 is free to move forwards to the front of its travel (it only engages with the follower piston in the rearwards direction) as shown in Fig. 8. A clip may be provided to retain the retractor in this front position e.g. a small protruding bump is provided on each side of the magazine support which engages with a corresponding detent on the inner surface of each side of the retractor 81. This retaining engagement can be overcome by the user pulling the retractor 81 rearwards but the engagement is sufficient to prevent the retractor from sliding along the magazine support 6 in normal use.

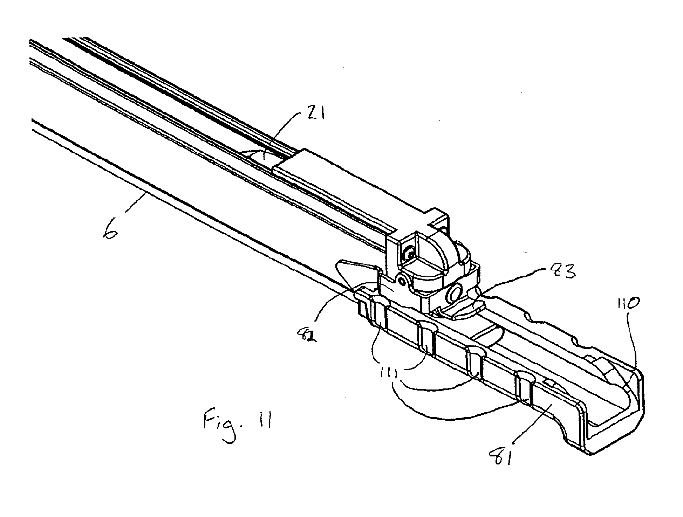

Fig. 11 shows an alternative view of the retractor 81 in the rearwards position and being retained by the retractor clip 82. It can be seen that the retractor has grips 111 along its length to provide a secure grip for the user. It also has a recessed channel 110 which fits around the magazine support 6 to guide the retractor 81 along the magazine support 6.

The present applicators and magazines provide a useful solution to the problems associated with applying a plurality of different tags to a single animal and, in particular, doing so to a plurality of animals.

## Claims

1. An applicator system for animal identification tags (31) comprising a tag magazine and an applicator having a pair of jaws (2,3), the tag magazine (30) adapted to supply discrete identification tags, each comprising a male (33) and female (34) engagement portion, sequentially to the jaws which, upon actuation, engage the male and female portions of the tag through the ear of an animal placed between the jaws,
**characterised in that** the magazine is loaded with different types of identification tag arranged to supply the different types of tag to the jaws of the applicator in a repeating order of the different types as the jaws (2,3) of the device are repeatedly actuated.

2. An applicator system according to claim 1, wherein the magazine is loaded with only two different types of identification tag arranged to supply the two types of tag alternately to the jaws (2,3).

3. An applicator system according to claim 1 or 2, wherein the differences in the types of tag are selected from one or more of colour, shape, size, and radio frequency function.

4. An applicator system according to any preceding claim, wherein the male (33) and female (34) engagement portions of respective identification tags are joined by a flexible connecting portion (35).

5. An applicator system according to claim 4, wherein the plural discrete identification tags are loaded into the magazine (30) with the flexible connecting portion (35) bent so that the male (33) and female (34) engagement portions are held adjacent each other but do not engage.

6. An applicator system according to claim 5, wherein the flexible portion of the tags (35) is resilient and the tags are in a pre-tensioned state in the magazine due to the bend in the resilient portion.

7. An applicator system according to any one of claims 1 to 4, wherein the magazine comprises a channel (32) and a front opening adjacent the jaws of the applicator and wherein the discrete tags (31) are slidable along the channel towards the front opening of the magazine.

8. An applicator system according to claim 7, wherein the where the magazine channel (32) is an elongate channel, and the walls of the channel define one or more recessed guide channels (39) which may accept one or more protrusions on each tag, to guide the tags towards the front opening of the magazine.

9. An applicator system according to any one of the preceding claims, wherein the magazine is made from transparent or translucent material or has a transparent or translucent window.

10. An applicator system according to any one of the preceding claims, wherein the magazine is removably connected to the applicator.

11. A method of applying an identification tag to an animal, the method comprising:
a) providing an applicator system of any one of claims 1 to 10;
b) actuating the jaws of the applicator to attach a first tag to the ear of an animal and to sequentially feed a second tag to the jaws.

12. A method according to claim 11 of applying two identification tags to one animal, the method further comprising:
c) actuating the jaws of the applicator a second time to attach a second tag to the ear of the same animal,
wherein the first and second tags are of different first and second types.

13. A method according to claim 12, the method further comprising, repeating steps b) and c) to attach a tag of the same first type and a tag of the same second type to a further animal.

14. A method according to claim 12 or 13, wherein the magazine supplies at least the first and second tags without being replaced or reloaded.

15. A method according to claim 12 or 13, wherein the magazine supplies the set of first and second types of tag to at least two individual animals without being replaced or reloaded.

## Patentansprüche

1. Applikatorsystem für Tieridentifikationsmarkierungen (31), umfassend ein Markierungsmagazin und einen Applikator mit einem Paar von Backen (2, 3), wobei das Markierungsmagazin (30) geeignet ist, einzelne Identifikationsmarkierungen, von denen jede einen Außen- (33) und einen Innen- (34) Eingriffsabschnitt umfasst, nacheinander den Backen zuzuführen, wobei die Backen beim Betätigen den Außen- und den Innenabschnitt der Markierung durch ein zwischen den Backen platziertes Ohr eines Tieres hindurch miteinander in Eingriff bringen,
**dadurch gekennzeichnet, dass** das Magazin mit verschiedenen Arten von Identifikationsmarkierungen geladen ist, die angeordnet sind, um den Backen des Applikators die verschiedenen Markierungsarten in einer sich wiederholenden Reihenfolge der verschiedenen Arten zuzuführen, während die Backen (2, 3) der Vorrichtung wiederholt betätigt werden.

2. Applikatorsystem nach Anspruch 1, worin das Magazin mit nur zwei verschiedenen Arten von Identifikationsmarkierungen geladen ist, die angeordnet sind, um die zwei Markierungsarten abwechselnd den Backen (2, 3) zuzuführen.

3. Applikatorsystem nach Anspruch 1 oder 2, worin die Unterschiede zwischen den Markierungsarten aus einem oder mehreren von Farbe, Form, Größe und Hochfrequenzfunktion ausgewählt sind.

4. Applikatorsystem nach einem der vorangegangenen Ansprüche, worin der Außen- (33) und der Innen- (34) Eingriffsabschnitt jeweiliger Identifikationsmarkierungen durch einen flexiblen Verbindungsabschnitt (35) verbunden sind.

5. Applikatorsystem nach Anspruch 4, worin das Magazin (30) mit den mehreren diskreten Identifikationsmarkierungen geladen wird, wobei der flexible Verbindungsabschnitt (35) so gebogen ist, dass der Außen- (33) und der Innen- (34) Eingriffsabschnitt benachbart zueinander gehalten werden, aber miteinander nicht in Eingriff gebracht sind.

6. Applikatorsystem nach Anspruch 5, worin der flexible Abschnitt der Markierungen (35) elastisch ist und worin die Markierungen aufgrund der Biegung des elastischen Abschnitts sich im Magazin in einem Vor-Anspannungszustand befinden.

7. Applikatorsystem nach einem der Ansprüche 1 bis 4, worin das Magazin einen Kanal (32) und eine Vorderöffnung benachbart zu den Backen des Applikators umfasst und worin die diskreten Markierungen (31) entlang des Kanals in Richtung der Vorderöffnung des Magazins gleitbar sind.

8. Applikatorsystem nach Anspruch 7, worin der Magazinkanal (32) ein länglicher Kanal ist und die Wände des Kanals einen oder mehrere ausgekehlte Leitkanäle (39) definieren, die einen oder mehrere Vorsprünge auf jeder Markierung aufnehmen können, um die Markierungen in Richtung der Vorderöffnung des Magazins zu leiten.

9. Applikatorsystem nach einem der vorangegangenen Ansprüche, worin das Magazin aus einem transparenten oder transluzenten Material hergestellt ist oder ein transparentes oder transluzentes Fenster aufweist.

10. Applikatorsystem nach einem der vorangegangenen Ansprüche, worin das Magazin mit dem Applikator entfernbar verbunden ist.

11. Verfahren zum Applizieren einer Identifikationsmarkierung auf ein Tier, wobei das Verfahren Folgendes umfasst:
a) Bereitstellen eines Applikatorsystems nach einem der Ansprüche 1 bis 10;
b) Betätigen der Backen des Applikators, um eine erste Markierung an einem Ohr eines Tieres anzubringen und anschließend den Backen eine zweite Markierung zuzuführen.

12. Verfahren nach Anspruch 11 zum Applizieren von zwei Identifikationsmarkierungen auf einem Tier, wobei das Verfahren ferner Folgendes umfasst:
c) Betätigen der Backen des Applikators zu einem zweiten Zeitpunkt, um eine zweite Markierung auf dem Ohr desselben Tieres anzubringen,
worin die erste und die zweite Markierung einem ersten und zweiten Typ entsprechen, die sich voneinander unterscheiden.

13. Verfahren nach Anspruch 12, worin das Verfahren ferner das Wiederholen der Schritte b) und c) umfasst, um eine Markierung desselben ersten Typs und eine Markierung desselben zweiten Typs auf einem weiteren Tier anzubringen.

14. Verfahren nach Anspruch 12 oder 13, worin das Magazin zumindest die erste und die zweite Markierung bereitstellt, ohne ausgetauscht oder aufgeladen zu werden.

15. Verfahren nach Anspruch 12 oder 13, worin das Magazin die Gruppe von ersten und zweiten Markierungstypen für zumindest zwei einzelne Tiere bereitstellt, ohne ausgetauscht oder aufgeladen zu werden.

## Revendications

1. Système d'applicateur pour des étiquettes d'identification d'animaux (31) comprenant un magazine d'étiquettes et un applicateur ayant une paire de mâchoires (2, 3), le magazine d'étiquettes (30) étant apte à fournir des étiquettes d'identification discrètes, chacune comprenant une portion d'engagement mâle (33) et femelle (34), séquentiellement aux mâchoires qui, lors de l'actionnement, mettent en prise les portions mâle et femelle de l'étiquette à travers l'oreille d'un animal placé entre les mâchoires,
**caractérisé en ce que** le magazine est chargé avec différents types d'étiquettes d'identification agencées pour fournir les différents types d'étiquettes aux mâchoires de l'applicateur selon un ordre répété des différents types lorsque les mâchoires (2, 3) du dispositif sont actionnées à répétition.

2. Système d'applicateur selon la revendication 1, dans lequel le magazine est chargé avec seulement deux types différents d'étiquettes d'identification agencées pour fournir les deux types d'étiquettes alternativement aux mâchoires (2, 3).

3. Système d'applicateur selon la revendication 1 ou 2, dans lequel les différences dans les types d'étiquettes sont sélectionnées entre une ou plusieurs d'une couleur, forme, taille et fonction de radiofréquence.

4. Système d'applicateur selon l'une quelconque des revendications précédentes, dans lequel les portions d'engagement mâles (33) et femelle (34) des étiquettes d'identification respectives sont reliées par une portion de connexion flexible (35).

5. Système d'applicateur selon la revendication 4, dans lequel la pluralité d'étiquettes d'identification discrètes sont chargées dans le magazine (30) avec la portion de connexion flexible (35) courbée de sorte que les portions d'engagement mâle (33) et femelle (34) sont maintenues d'une manière adjacente l'une à l'autre mais ne viennent pas en prise.

6. Système d'applicateur selon la revendication 5, dans lequel la portion flexible des étiquettes (35) est résiliente, et les étiquettes sont dans un état précontraint dans le magazine à cause de la courbure dans la portion résiliente.

7. Système d'applicateur selon l'une quelconque des revendications 1 à 4, dans lequel le magazine comprend un canal (32) et une ouverture frontale adjacente aux mâchoires de l'applicateur, et où les étiquettes discrètes (31) sont aptes à coulisser le long du canal vers l'ouverture frontale du magazine.

8. Système d'applicateur selon la revendication 7, dans lequel le canal du magazine (32) est un canal oblong, et les parois du canal définissent un ou plusieurs canaux de guidage évidés (39) qui sont aptes à recevoir une ou plusieurs saillies sur chaque étiquette, pour guider les étiquettes vers l'ouverture frontale du magazine.

9. Système d'applicateur selon l'une quelconque des revendications précédentes, dans lequel le magazine est réalisé à partir d'un matériau transparent ou translucide ou possède une fenêtre transparente ou translucide.

10. Système d'applicateur selon l'une quelconque des revendications précédentes, dans lequel le magazine est relié d'une manière amovible à l'applicateur.

11. Procédé d'application d'un marqueur d'identification à un animal, le procédé comprenant :
a) réaliser un système d'applicateur selon l'une quelconque des revendications 1 à 10 ;
b) actionner les mâchoires de l'applicateur pour fixer une première étiquette à l'oreille d'un animal et pour amener séquentiellement une deuxième étiquette aux mâchoires.

12. Procédé selon la revendication 11, consistant à appliquer deux étiquettes d'identification à un animal, le procédé comprenant en outre :
c) actionner les mâchoires de l'applicateur une deuxième fois pour fixer une deuxième étiquette à l'oreille du même animal,
où les première et deuxième étiquettes sont de premier et deuxième types différents.

13. Procédé selon la revendication 12, le procédé comprenant en outre la répétition des étapes b) et c) pour fixer une étiquette du même premier type et une étiquette du même deuxième type à un autre animal.

14. Proc2dé selon la revendication 12 ou 13, dans lequel le magazine fournit au moins les première et deuxième étiquettes sans être remplacé ou rechargé.

15. Procédé selon la revendication 12 ou 13, dans lequel le magazine fournit l'ensemble des premier et deuxième types d'étiquette à au moins deux animaux individuels sans être remplacé ou rechargé.
